# EUROPÄISCHE PATENTANMELDUNG

(11) **EP 4 756 312 A1**
(43) Veröffentlichungstag der Anmeldung: **10.06.2026**
(21) Anmeldenummer: 24217538.8
(22) Anmeldetag: 04.12.2024
(51) Int. Cl.: F24S 25/636, H02S 20/24

(54) **BEFESTIGUNGSVORRICHTUNG ZUR BEFESTIGUNG EINES MODULRAHMENS EINES AUFLAGEELEMENTS AN EINER DACHKONSTRUKTION**

(71) Anmelder: AEROCOMPACT Group Holding GmbH, 1220 Wien (AT)
(72) Erfinder: BURGER, Markus M., 6791 St. Gallenkirch (AT)
(74) Vertreter: Patent- und Rechtsanwälte Behrmann Wagner PartG mbB

(57) **Zusammenfassung**

Es wird eine Befestigungsvorrichtung zur Befestigung eines Modulrahmens eines Auflageelements, insbesondere eines Photovoltaik- und/oder Solarthermie-Paneels, an einer Dachkonstruktion vorgeschlagen, umfassend eine Montageschiene (4), ein Anbindungselement (5) und eine Spannschraube (6). Das Anbindungselement (5) umfasst zwei Außenschenkel (7), zwei Innenschenkel (8), eine erste Querstrebe (9) und eine zweite Querstrebe (10). Die Innenschenkel (8) sind an ihrem ersten Ende über die erste Querstrebe (9) mit den Außenschenkeln (7) verbunden und die Außenschenkel (7) sind an ihrem ersten Ende über die zweite Querstrebe (10) miteinander verbunden. Die Außenschenkel (7) umfassen an ihrem zweiten Ende jeweils eine Auflagefläche (11), die auf einer Stützfläche (12) der Montageschiene (4) aufliegt. die erste Querstrebe (9) umfasst in einem mittleren Bereich (13) eine erste Durchgangsbohrung (24), in welche die Spannschraube (6) derart einschraubbar ist, dass die erste Querstrebe (9) in dem mittleren Bereich (13) in Richtung der zweiten Querstrebe (10) verschoben ist, wodurch zweite Enden der Innenschenkel (8) derart zueinander und in Richtung der zweiten Querstrebe (10) bewegt sind, dass an den zweiten Enden angeordnete Hakenelemente (20) jeweils mit einem Hakengegenelement (14) der Montageschiene (4) in Eingriff stehen.

## Beschreibung

Die vorliegende Erfindung betrifft eine Befestigungsvorrichtung zur Befestigung eines Modulrahmens eines Auflageelements, insbesondere eines Photovoltaik- und/oder Solarthermie-Panels, an einer Dachkonstruktion, umfassend eine Montageschiene, ein Anbindungselement und eine Spannschraube.

Es ist aus dem Stand der Technik bekannt, Modulrahmen von Auflageelementen über ein Anbindungselement und eine Spannschraube an einer Montageschiene zu fixieren, welche an der Dachkonstruktion befestigt ist.

Beispielsweise beschreibt die WO 2020/187472 A1 eine Endklemme zur Befestigung eines gerahmten Photovoltaik-Moduls auf einem Tragprofil. Die Endklemme weist ein Konsolenelement, das am Tragprofil befestigt ist, und einen Klemmbügel zum Niederhalten eines Rahmens des Photovoltaik-Moduls auf. Der Klemmbügel umfasst eine Klemmfläche, die klemmend am Rahmen des Photovoltaik-Moduls anliegt. Der Klemmbügel umfasst ferner eine Stützfläche, an welcher der Klemmbügel seitlich abgestützt an einer Kontaktfläche des Konsolenelements anliegt. Das Konsolenelement weist zwei elastisch federnd angelenkte Spreizhaken auf, die in einer Ausnehmung des Tragprofils befestigt sind. Die Spreizhaken umfassen jeweils ein Hakenelement, das den Rand der Ausnehmung des Drahtprofils fixierend hintergreift. Die Spreizhaken sind elastisch federnd einander annäherbar, um den Hintergriff der Hakenelemente am Rand der Ausnehmung zu lösen. Zwischen den beiden Spreizhaken ist ein Zwischenraum gebildet. In dem Zwischenraum wird eine Spannschraube beim Spannen der Endklemme eingeführt, mittels der der Klemmbügel zum Niederhalten des Rahmens des Photovoltaik-Moduls an dem Konsolenelement verspannt ist. Auf der zur Spannschraube weisenden Innenseite der Spreizhaken ist jeweils ein Blockadensteg angeformt. Die Blockadenstege kommen jeweils mit einem freien Ende an der Spannschraube zur Anlage. Hierdurch ist eine elastisch federnde Annäherung der Spreizhaken und mithin ein Lösen der Klemmbügel von den Rahmen blockiert.

Bei der aus der WO 2020/187472 A1 bekannten Endklemme wirkt die gesamte zur Befestigung des Photovoltaik-Moduls erforderliche Kraft auf die beiden Spreizhaken.

Mithin sind die Spreizhaken sehr stabil auszugestalten, wobei es auch bei stabiler Ausgestaltung der Spreizhaken im Laufe deren Lebensdauer regelmäßig, insbesondere aufgrund von einer aus Witterungsbedingungen resultierenden Verschlechterung der Materialeigenschaften der Spreizhaken, zu einem Bruch dieser kommt.

Basierend auf dem bekannten Stand der Technik besteht die Aufgabe der vorliegenden Erfindung darin, eine Befestigungsvorrichtung zur Befestigung eines Modulrahmens eines Auflageelements an einer Dachkonstruktion bereitzustellen, mittels welcher ein Auflageelement über einen langen Zeitraum hinweg, sicher an einer Dachkonstruktion fixierbar ist.

Diese Aufgabe ist erfindungsgemäß durch die Befestigungsvorrichtung mit den Merkmalen des Patentanspruchs 1 gelöst.

Vorteilhafte Ausführungsformen der vorliegenden Erfindung sind Gegenstand der nachfolgenden Beschreibung, der Figurenbeschreibung, der Figuren sowie der Unteransprüche.

Erfindungsgemäß wird also eine Befestigungsvorrichtung zur Befestigung eines Modulrahmens eines Auflageelements, insbesondere eines Photovoltaik- und/oder Solarthermie-Panels, an einer Dachkonstruktion bereitgestellt. Die Befestigungsvorrichtung umfasst eine, insbesondere an der Dachkonstruktion fixierbare, Montageschiene, ein Anbindungselement und eine Spannschraube. Der Modulrahmen ist an dem Anbindungselement fixierbar. Das Anbindungselement weist zwei Außenschenkel, zwei zwischen den Außenschenkeln angeordnete Innenschenkel, eine erste Querstrebe und eine zweite Querstrebe auf. Die Innenschenkel sind an ihrem ersten Ende über die erste Querstrebe miteinander und mit den Außenschenkeln verbunden. Die Außenschenkel sind an ihrem ersten Ende über die zweite Querstrebe miteinander verbunden. Die Außenschenkel umfassen an ihrem dem ersten Ende gegenüberliegenden zweiten Ende jeweils eine Auflagefläche. Die Auflageflächen liegen jeweils auf einer betreffenden Stützfläche der Montageschiene auf, insbesondere derart, dass eine Relativbewegung des Anbindungselements relativ zu der Montageschiene in Hochrichtung nach unten ausgeschlossen ist. Die erste Querstrebe weist in einem mittleren Bereich eine erste Durchgangsbohrung auf, welche insbesondere ein Innengewinde aufweist. In die erste Durchgangsbohrung ist die Spannschraube, welche insbesondere ein Außengewinde aufweist, derart einschraubbar, dass die erste Querstrebe in dem mittleren Bereich in Richtung der zweiten Querstrebe verschoben ist. Durch das Verschieben der ersten Querstrebe in dem mittleren Bereich in Richtung der zweiten Querstrebe, also in Hochrichtung nach oben, sind zweite Enden der Innenschenkel, welche den ersten Enden gegenüberliegen, derart, insbesondere in Querrichtung, zueinander, also weg von dem jeweils benachbarten Außenschenkeln, und in Hochrichtung nach oben, also in Richtung der Querstreben, bewegt, dass diese jeweils mit einem betreffenden Hakengegenelement der Montageschiene zur Sicherung des Anbindungselements an der Montageschiene in Eingriff stehen. Durch den Eingriff der Hakenelemente mit den Hakengegenelementen ist eine Bewegung des Anbindungselements relativ zu der Montageschiene in Hochrichtung nach oben, also von der Montageschiene weg, ausgeschlossen.

Ein Verschieben des Anbindungselements relativ zu der Montageschiene in Längserstreckungsrichtung der Montageschiene ist hingegen möglich, wenn die Spannschraube nicht oder zumindest nicht vollständig in die erste Durchgangsbohrung eingeschraubt ist. Die Hakenelemente stellen zusammen mit den Hakengegenelementen also eine Art Vorrastung bzw. Vorfixierung des Anbindungselements an der Montageschiene bereit.

Kerngedankte der Erfindung ist es also, das Anbindungselement der Befestigungsvorrichtung derart auszugestalten, dass die Innenschenkel durch Einschrauben der Spannschraube in die erste Durchgangsbohrung aus einer Freigabeposition in eine Sicherungsposition bewegbar sind. Bei einem Verstellen der Innenschenkel aus der Freigabeposition in die Sicherungsposition werden die Innenschenkel, insbesondere die zweiten Enden der Innenschenkel in Querrichtung zueinander und in Hochrichtung nach oben bewegt, so dass diese mit Hakengegenelementen der Montageschiene derart in Eingriff gelangen, dass eine Bewegung des Anbindungselements relativ zu der Montageschiene in Hochrichtung nach oben ausgeschlossen ist. Durch Auflage bzw. Abstützung der Auflageflächen auf der Montageschiene, insbesondere den Stützflächen, ist wiederum eine Relativbewegung des Anbindungselements relativ zu der Montageschiene in Hochrichtung nach unten ausgeschlossen.

Wenn die Spannschraube in die erste Durchgangsbohrung eingeschraubt ist, sind beispielsweise die Hakenelemente jeweils mit einem betreffenden der Hakengegenelemente derart in Kontakt bzw. hintergreifen die Hakenelemente jeweils ein betreffendes der Hakengegenelemente beispielsweise derart, dass eine Bewegung des Anbindungselements relativ zu der Montageschiene in Querrichtung ausgeschlossen ist.

Die zweite Querstrebe ist beispielsweise von den Innenschenkeln und/oder der ersten Querstrebe beabstandet, insbesondere in Hochrichtung oberhalb der Innenschenkel bzw. der ersten Querstrebe angeordnet.

Die zweite Querstrebe kann über die Außenschenkel mit der ersten Querstrebe verbunden sein.

Die erste Querstrebe, die zweite Querstrebe und ein oberer Bereich der Außenschenkel bilden beispielsweise ein rahmenartiges Profil.

Gemäß einer vorteilhaften Ausführungsform umfasst die Befestigungsvorrichtung nach der Erfindung ein Modulklemmelement. Mittels des Modulklemmelements und des Anbindungselements, insbesondere der zweiten Querstrebe des Anbindungselements ist der Modulrahmen zur Fixierung an dem Anbindungselement einklemmbar.

Gemäß einer beispielhaften Ausführungsform der Befestigungsvorrichtung nach der Erfindung umfasst das Modulklemmelement eine zweite Durchgangsbohrung. Die Spannschraube erstreckt sich durch die zweite Durchgangsbohrung. Der Schraubenkopf der Spannschraube liegt, insbesondere wenn die Spannschraube in die erste Durchgangsbohrung eingeschraubt ist, auf dem Modulklemmelement auf. Somit ist das Modulklemmelement in einer definierten Position gesichert, in der das Modulelement zwischen dem Anbindungselement und dem Modulklemmelement verklemmt ist. Durch Einschrauben der Spannschraube in die erste Durchgangsbohrung ist mithin gleichzeitig sowohl das Anbindungselement an der Montageschiene als auch das Auflageelement an dem Anbindungselement sicherbar.

Gemäß einer bevorzugten Ausführungsform der Befestigungsvorrichtung nach der Erfindung entfernen sich die Innenschenkel ausgehend von ihren ersten Enden in Richtung ihrer zweiten Enden voneinander, insbesondere in Querrichtung. Die zweiten Enden der Innenschenkel sind also weiter voneinander beabstandet als die ersten Enden dieser.

Die Innenschenkel können sich kontinuierlich voneinander entfernen.

Die Innenschenkel weisen also beispielsweise zusammen mit dem die Innenschenkel miteinander verbindenden Bereich der ersten Querstrebe ein in Richtung Montageschiene geöffnetes, trapezförmiges Profil auf, insbesondere bei einem Schnitt entlang einer sich in Hochrichtung und Querrichtung erstreckenden Schnittebene.

Die Außenschenkel entfernen sich beispielsweise ausgehend von einem Bereich, an welchem die erste Querstrebe an diese angrenzt, in Richtung ihrer zweiten Enden voneinander, insbesondere in Querrichtung.

Das Anbindungselement ist beispielsweise derart ausgestaltet, dass durch Einschrauben der Spannschraube in die erste Durchgangsbohrung erste Enden der Außenschenkel voneinander entfernbar sind, insbesondere in Querrichtung.

Die Außenschenkel können sich, ausgehend von Bereichen, an welche die erste Querstrebe angrenzt, jeweils in Richtung ihrer zweiten Enden, also in Hochrichtung nach unten, insbesondere in Querrichtung, voneinander entfernen, insbesondere kontinuierlich.

Untere Bereiche der Außenschenkel können also zusammen mit der ersten Querstrebe einen sich in Richtung der Montageschiene geöffnetes trapezförmiges Profil aufweisen, insbesondere bei einem Schnitt entlang einer sich in Hochrichtung und Querrichtung erstreckenden Schnittebene.

Bei dem unteren Bereich der Außenschenkel handelt es sich beispielsweise jeweils um einen Bereich, der sich von dem zweiten Ende des betreffenden Außenschenkels bis zu einem an die erste Querstrebe angrenzenden Bereich erstreckt.

Gemäß einer vorteilhaften Ausführungsform der Befestigungsvorrichtung nach der Erfindung ist das Anbindungselement monolithisch bzw. einteilig ausgestaltet.

Gemäß einer bevorzugten Ausführungsform der Befestigungsvorrichtung nach der Erfindung sind bzw. ist die erste Querstrebe, die Innenschenkel und/oder die Außenschenkel elastisch.

Gemäß einer bevorzugten Ausführungsform umfasst die Befestigungsvorrichtung nach der Erfindung ein Abstandselement. Das Abstandselement ist zwischen dem Modulklemmelement und dem Anbindungselement, insbesondere der zweiten Querstrebe, angeordnet.

Gemäß einer bevorzugten Ausführungsform der Befestigungsvorrichtung nach der Erfindung sind das Abstandselement und die Modulklemme einteilig ausgebildet, sie bilden also ein durchgängiges Bauteil.

Das Abstandselement umfasst beispielsweise ein Federelement.

Das Federelement kann an seinem ersten Ende, insbesondere an einem in Hochrichtung oberen Ende, an dem Modulklemmelement anliegen.

Gemäß einer bevorzugten Ausführungsform der Befestigungsvorrichtung nach der Erfindung weist das Abstandselement einen Grundkörper auf, der ein Positionierelement umfasst.

Die zweite Querstrebe umfasst beispielsweise eine Aussparung, deren Geometrie derart mit der Geometrie des Abstandselements, insbesondere des Positionierelements, korrespondiert, dass das Abstandselement nur in definierten Positionen, insbesondere in genau zwei oder vier definierten Positionen, auf der zweiten Querstrebe, insbesondere in der Aussparung, anordbar ist.

Das Federelement grenzt beispielsweise mit seiner Unterseite an die Oberseite des Grundkörpers an.

Das Federelement und der Grundkörper können einteilig, also als ein durchgängiges Bauteil, ausgestaltet sein.

Das Positionierelement ist beispielsweise an der Unterseite des Grundkörpers oder durch die Geometrie des Grundkörpers selbst ausgebildet.

Das Positionierelement kann quaderförmig sein und/oder ein rechteckiges oder quadratisches Profil aufweisen in einem Schnitt entlang einer sich in Querrichtung und Längsrichtung erstreckenden Schnittebene.

Die Querrichtung, die Längsrichtung und die Hochrichtung erstrecken sich jeweils orthogonal zueinander.

Die Hochrichtung erstreckt sich orthogonal zu einer Quererstreckungsebene der Montageschiene.

In einem montierten Zustand der Befestigungsvorrichtung an der Dachkonstruktion erstreckt sich die Hochrichtung orthogonal zu einer Quererstreckungsebene der Dachkonstruktion, insbesondere einer Oberseite der Dachkonstruktion, auf welcher die Montageschiene fixiert ist, und mithin orthogonal zu einer Quererstreckungsebene der Montageschiene.

Die Montageschiene umfasst beispielsweise zwei Schienenelemente.

Die Montageschiene kann eine Grundplatte aufweisen, die flächig auf der Dachkonstruktion anordbar und an dieser fixierbar ist.

Beispielsweise sind die Schienenelemente über die Grundplatte miteinander verbunden.

Die Schienenelemente können auf der Grundplatte fixiert sein

Alternativ kann die Grundplatte die Böden der Schienenelemente bilden. Die Montageschiene kann also einteilig ausgebildet sein.

Die Schienenelemente weisen beispielsweise in einem Schnitt entlang einer sich in Hochrichtung und Querrichtung erstreckenden Schnittebene ein U-förmiges Profil auf, welches in Hochrichtung oben geöffnet ist. Die offenen Seiten der U-Profile sind also beispielsweise in einem funktionsgemäßen Montagezustand der Befestigungsvorrichtung an einer Dachkonstruktion der Dachkonstruktion abgewandt.

Die Schienenelemente erstrecken sich in Längsrichtung beispielsweise parallel zueinander.

In Querrichtung sind die Schienenelemente beispielsweise derart voneinander beabstandet, dass innenliegende Schenkel der Schienenelemente zusammen mit der Grundplatte ein in Hochrichtung nach oben geöffnetes Sackloch definieren.

Das Sackloch kann ein Innengewinde aufweisen, in das die Spreizschraube einschraubbar ist.

Das Abstandselement ist beispielsweise in der zweiten Position gegenüber der ersten Position um 90° rotiert, insbesondere um eine sich in Hochrichtung erstreckende Rotationsachse.

Mittels des Positionierelements und der Aussparung ist das Abstandselement also beispielsweise relativ zu dem Anbindungselement in Querrichtung und Längsrichtung positionsgesichert.

Um das Abstandselement aus einer definierten Position in eine weitere definierte Position zu bringen, ist beispielsweise das Abstandselement derart in Hochrichtung nach oben zu bewegen, dass das Positionierelement aus der Aussparung entfernt ist.

Das Abstandselement kann zumindest teilweise, insbesondere vollständig aus Metall gebildet sein.

Gemäß einer bevorzugten Ausführungsform der Befestigungsvorrichtung nach der Erfindung umfasst das Abstandselement eine dritte Durchgangsbohrung, in welcher die Spannschraube angeordnet ist bzw. durch welche sich die Spannschraube hindurch erstreckt.

Die Auflageflächen der Außenschenkel können jeweils in einem Schnitt entlang einer sich in Hochrichtung und Querrichtung erstreckenden Schnittebene ein L-förmiges Profil aufweisen, wobei sich ein erster Schenkel des Ls in Hochrichtung erstreckt und der zweite Schenkel des Ls in Querrichtung erstreckt.

Gemäß einer bevorzugten Ausführungsform der Befestigungsvorrichtung nach der Erfindung sind die Außenschenkel durch Verschieben der ersten Querstrebe in dem mittleren Bereich in Hochrichtung nach oben nach außen spreizbar.

Gemäß einer beispielhaften Ausführungsform der Befestigungsvorrichtung nach der Erfindung stehen die Hakenelemente derart mit Hakengegenelementen in Eingriff, bzw. hintergreifen die Hakengegenelemente derart, dass eine Bewegung des Anbindungselements relativ zu der Montageschiene in Hochrichtung nach oben und/oder in Querrichtung in beide Richtungen unterbunden ist.

Die Auflageflächen, insbesondere sich in Querrichtung und Längsrichtung erstreckende Schenkel der Auflagefläche, liegen beispielsweise derart auf den Stützflächen auf, dass eine Bewegung des Anbindungselements relativ zu der Montageschiene in Hochrichtung nach unten unterbunden ist.

Die Auflageflächen, insbesondere sich in Hochrichtung und Längsrichtung erstreckenden Schenkel der Auflagefläche, können in dem nach außen gespreizten Zustand an sich zugewandten Seiten der Stützflächen anliegen, insbesondere derart, dass zwischen den Auflageflächen und den Stützflächen ein Kraftschluss besteht, welcher insbesondere ein Verschieben des Anbindungselements in Längsrichtung relativ zu der Montageschiene ausschließt.

Das Anbindungselement ist an der Montageschiene in Hochrichtung beispielsweise durch Formschluss, in Querrichtung durch Formschluss und/oder in Längsrichtung durch Kraftschluss sicherbar.

Das Anbindungselement kann Aluminium oder einen Kunststoff, insbesondere einen Hochleistungskunststoff, umfassen oder aus einem der vorgenannten Materialen gebildet sein.

Beispielsweise ist das Anbindungselement mittels eines additiven Fertigungsverfahrens hergestellt.

Die vorliegende Erfindung wird nachfolgend anhand von rein schematischen und beispielhaften Figuren erläutert, welche Ausführungsbeispiele der Erfindung wiedergeben.

Darin zeigen:
- Figur 1: eine perspektivische Ansicht einer ersten Befestigungsvorrichtung nach der Erfindung, zusammen mit einem Modulrahmen und einer Dachkonstruktion;
- Figur 2: eine Vorderansicht der ersten Befestigungsvorrichtung nach der Erfindung aus Figur 1, zusammen mit einem Modulrahmen und einer Dachkonstruktion;
- Figur 3: eine perspektivische Ansicht einer zweiten Befestigungsvorrichtung nach der Erfindung, ohne Darstellung einer Montageschiene; und
- Figur 4: eine Vorderansicht der zweiten Befestigungsvorrichtung nach der Erfindung aus Figur 3, ohne Darstellung der Montageschiene.

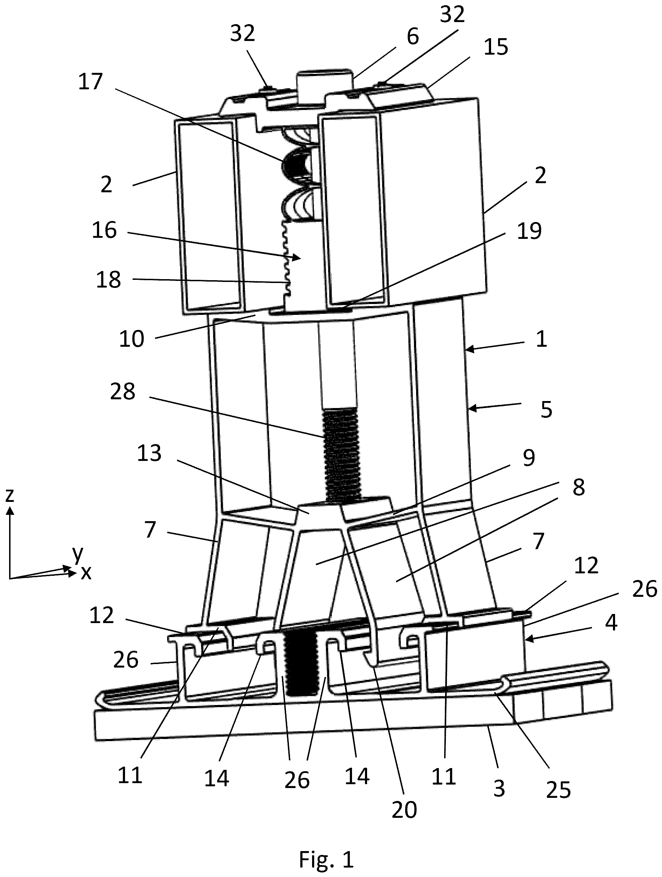

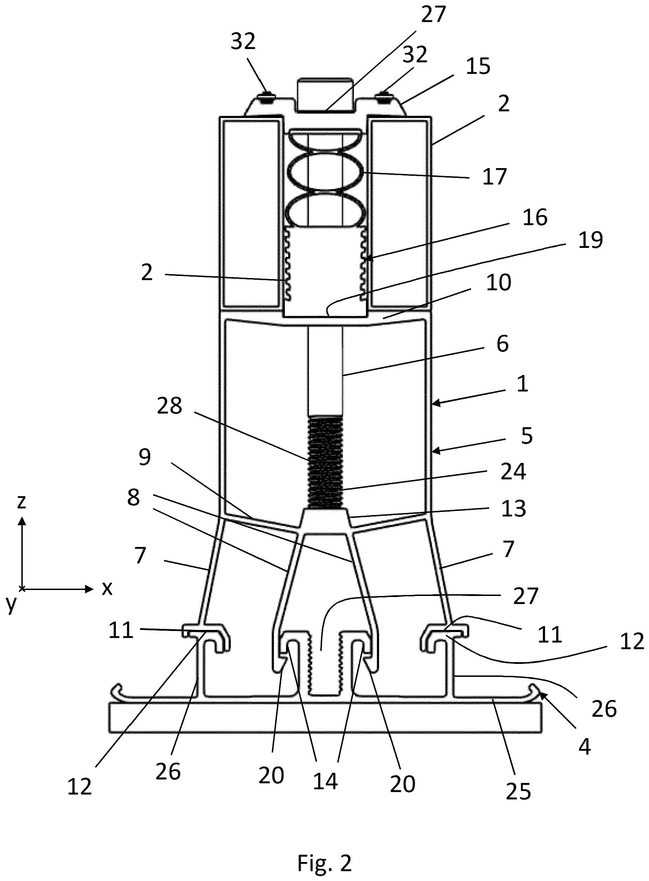

In den Figuren 1 und 2 ist eine erste Befestigungsvorrichtung 1 nach der Erfindung zur Fixierung eines Modulrahmes 2 eines Auflageelements, insbesondere ein Photovoltaik- und/oder ein Solarthermie-Panel, an einer Dachkonstruktion 3 dargestellt. Die Befestigungsvorrichtung 1 umfasst eine Montageschiene 4, ein Anbindungselement 5, ein Abstandselement 16, ein Modulklemmelement 15 und eine Spannschraube 6.

Die Montageschiene 4 ist auf der Dachkonstruktion 3 fixiert und umfasst eine Grundplatte 25 sowie zwei Schienenelemente 26.

Die Grundplatte 25 ist ein plattenartiges, d.h. ein eben ausgestaltetes Element, welches flächig auf der Dachkonstruktion 3 aufliegt und an dieser mittels aus dem Stand der Technik bekannter Techniken fixiert ist.

Wie insbesondere aus Figur 2 ersichtlich ist, weisen die beiden Schienenelemente 26 bei einem Schnitt entlang einer sich in Hochrichtung und Querrichtung x erstreckenden Schnittebene jeweils ein U-förmiges Profil auf (siehe Figur 2). Die offenen Seiten der U-Profile sind der Grundplatte 25 abgewandt. Die Schienenelemente 26 sind in Hochrichtung oben also offen ausgestaltet. Die Montageschiene 4 ist einteilig ausgebildet, so dass ein Boden der Schienenelemente 26 durch die Grundplatte 25 gebildet ist. Die Schienenelemente 26 erstrecken sich in Längsrichtung y parallel zueinander. In Querrichtung x sind die Schienenelemente 26 derart voneinander beabstandet, dass innenliegende Schenkel der Schienenelemente 26 zusammen mit der Grundplatte 25 ein in Hochrichtung z nach oben geöffnetes Sackloch 30 definieren. Das Sackloch 30 kann ein Innengewinde aufweisen.

Die Hochrichtung z erstreckt sich orthogonal zu einer Oberfläche der Dachkonstruktion 3, an welcher die Montageschiene 4 fixiert ist, und mithin orthogonal zu einer sich in Querrichtung x und Längsrichtung y erstreckenden Quererstreckungsebene der Montageschiene 4. Die Längsrichtung y entspricht einer Längserstreckungsrichtung der Schienenelemente 26 und erstreckt sich orthogonal zur Querrichtung x. Die Querrichtung x erstreckt sich wiederum orthogonal zu der Hochrichtung z und der Längsrichtung y.

Die Montageschiene 4 umfasst zwei Stützflächen 12 und zwei Hakengegenelemente 14. Die Stützflächen 12 sind an in Hochrichtung z oberen Enden der außenliegenden Schenkel der Schienenelemente 26 angeordnet, also an der Grundplatte abgewandten Enden der Schenkel der Schienenelemente 26, welche jeweils dem betreffenden anderen Schienenelement 26 abgewandt sind. An oberen Enden der innenliegenden Schenkel des Schienenelements 26 sind die Hakengegenelemente 14 vorgesehen.

Das Anbindungselement 5 umfasst zwei Außenschenkel 7, zwei Innenschenkel 8, eine erste Querstrebe 9 und eine zweite Querstrebe 10. Die erste Querstrebe 9 verbindet die Innenschenkel 8 an ihrem ersten Ende, welches in Hochrichtung z oben angeordnet ist, mit den Außenschenkeln 7, grenzt insbesondere in einem mittleren Bereich an die Außenschenkel 7 an. Die zweite Querstrebe 10 ist in Hochrichtung z oberhalb der ersten Querstrebe 9, von der ersten Querstrebe 9 beabstandet angeordnet. Die zweite Querstrebe verbindet die Außenschenkel 7 an ihren ersten Enden, welche in Hochrichtung z oben angeordnet sind, miteinander. Das Anbindungselement ist bevorzugt einteilig ausgebildet.

Die Innenschenkel 8 weisen an ihren den ersten Enden gegenüberliegenden zweiten Enden jeweils ein Hakenelemente 20 auf, das mit einem betreffenden Hakengegenelement 14 der Montageschiene zur Sicherung des Anbindungselements 5 an der Montageschiene 4 in Eingriff bringbar ist.

Die Außenschenkel 7 weisen jeweils an ihrem in Hochrichtung z unteren, zweiten Ende eine Auflagefläche 11 auf, welches zur Abstützung und Sicherung des Anbindungselements 5 an der Montageschiene 4 auf einer betreffenden Stützfläche 12 der Montageschiene 4 zur Auflage bzw. Anlage bringbar ist.

Wie insbesondere aus der Schnittansicht in Figur 2 ersichtlich ist, entfernen sich die Innenschenkel 8 in Hochrichtung z nach unten, in Querrichtung x voneinander. Auch die Außenschenkel 7 entfernen sich in Hochrichtung z nach unten, ausgehend von dem mittleren Bereich, in welchem die Außenschenkel 7 über die erste Querstrebe 9 miteinander verbunden sind, in Querrichtung x voneinander. Die Außenschenkel 7 und die Innenschenkel 8 bilden also jeweils zusammen mit der ersten Querstrebe 9 bzw. einem in Querrichtung x mittleren Bereich 13 der ersten Querstrebe 9 bei einem Schnitt entlang einer sich in Hochrichtung z und Querrichtung x erstreckenden Schnittebene ein in Hochrichtung z nach unten geöffnetes, zumindest im Wesentlichen trapezförmiges Profil.

Die erste Querstrebe 9 umfasst zwei Verbindungsbereiche, welche den mittleren Bereich 13 jeweils mit einem betreffenden der Außenschenkeln 7 verbinden. Die Außenschenkel 7 sind, ausgehend von den Außenschenkeln 7, in Richtung des mittleren Bereichs 13 in Hochrichtung z leicht nach unten geneigt. Der mittlere Bereich 13 erstreckt sich zumindest annähernd parallel zu der Quererstreckungsebene der Montageschiene 4 bzw. der Oberfläche der Dachkonstruktion 3. Bei einem Schnitt entlang einer sich in Hochrichtung z und Querrichtung x erstreckenden Schnittebene weist die erste Querstrebe 9 also ein flach V-förmiges Profil auf.

Der mittlere Bereich 13 ist dicker ausgestaltet als die Verbindungsbereiche und umfasst eine erste Durchgangsbohrung 24. Die erste Durchgangsbohrung 24 weist ein Innengewinde auf.

Die zweite Querstrebe 10 erstreckt sich zumindest annähernd parallel zu der Quererstreckungsebene der Montageschiene 4 bzw. der Oberfläche der Dachkonstruktion 3 und weist eine Aussparung 19 auf. Der Mittelpunkt der ersten Aussparung 19 fluchtet in Hochrichtung z mit dem Mittelpunkt der ersten Durchgangsbohrung 24.

Das Abstandselement 16 umfasst einen Grundkörper 18 und ein in Hochrichtung z auf dem Grundkörper 18 angeordnetes Federelement 17. Der Grundkörper 18 und das Federelement 17 sind bevorzugt einteilig ausgebildet.

An der Unterseite des Grundkörpers 18 ist ein Positionierelement ausgebildet, dessen Geometrie derart mit der Geometrie der Aussparung 19 des Anbindungselements 5 korrespondiert, dass das Abstandselement 16 nur in definierten Positionen, insbesondere in genau vier definierten Positionen, an dem Anbindungselement 5, insbesondere in der Aussparung 19, anordbar ist.

Das Modulklemmelement 15 weist eine zweite Durchgangsbohrung 27 auf. Der Mittelpunkt der zweiten Durchgangsbohrung 27 fluchtet in Hochrichtung z mit dem Mittelpunkt der Aussparung 19 und dem Mittelpunkt der ersten Durchgangsbohrung 24.

Zur Fixierung der Modulrahmen 2 an der Montageschiene 4 wird die Spannschraube 6, welche an ihrem in Hochrichtung z unteren Ende ein Außengewinde 28 aufweist, in das Innengewinde der ersten Durchgangsbohrung 24 (weiter) eingeschraubt. Hierbei erstreckt sich die Spannschraube 6 durch Aussparung 19 und die zweiten Durchgangsbohrung 27. Der Kopf der Spannschraube 6 liegt auf dem Modulklemmelement 15 auf. Die Spannschraube 6 übt mithin eine derartige Kraft auf das Modulklemmelement 15 aus, dass die Modulrahmen 2 von der zweiten Querstrebe 10 und dem Modulklemmelement 15 eingeklemmt sind, so dass insbesondere eine kraftschlüssige Verbindung zwischen der zweiten Querstrebe 10, dem Modulklemmelement 15 und den Modulrahmen 2 besteht.

An dem Modulklemmelement 15 sind mindestens zwei Erdungspins 32 zur Gewährleistung eines Potentialausgleichs vorgesehen. Hierzu umfasst das Modulklemmelement 15 insbesondere mindestens zwei Aussparungen, in welche jeweils ein betreffender der Erdungspins 32 angeordnet ist.

Durch das Einschrauben der Spannschraube 6 in die erste Durchgangsbohrung 24 wird der mittlere Bereich 13 der ersten Querstrebe 9 in Hochrichtung z nach oben bewegt. Dies hat zu Folge, dass die Innenschenkel 8 in Hochrichtung z nach oben und in Querrichtung x zueinander bewegt werden, wodurch die an dem zweiten Ende dieser angeordneten Hakenelemente 20 mit den Hakengegenelementen 14 der Montageschiene 4 derart in Eingriff gelangen, dass eine Bewegung des Anbindungselements 5 relativ zu der Montageschiene 4 in Hochrichtung z nach oben und in Querrichtung x in beide Richtungen durch Formschluss ausgeschlossen ist. Durch die Auflage der Auflageflächen 11 auf den Stützflächen 12 ist eine Bewegung des Anbindungselements 5 relativ zu der Montageschiene 4 in Hochrichtung z nach unten durch Formschluss ausgeschlossen.

Die Auflageflächen 11 und die Stützflächen 12 weisen jeweils bei einem Schnitt entlang einer sich in Hochrichtung z und Querrichtung x erstreckenden Schnittebene ein liegendes L-förmiges Profil auf. Zusätzlich zu den mit den Hakengegenelementen 14 in Eingriff stehenden Hakenelementen 20 schließen auch die sich in Hochrichtung z erstreckenden Bereiche der Auflageflächen 11 und der Stützflächen 12 eine Bewegung des Anbindungselements 5 relativ zu der Montageschiene 4 in Querrichtung x durch Formschluss aus. Eine zur Sicherung des Anbindungselement 5 an der Montageschiene 4 erforderliche Kraft wirkt mithin verteilt.

Das Einschrauben der Spannschraube 6 in die erste Durchgangsbohrung 24 verursacht ferner eine kraftschlüssige Verbindung zwischen den Hakenelementen 20 und den Hakengegenelementen 14 und zwischen den Auflageflächen 11 und den Stützflächen 12. Somit ist das Anbindungselement 5 gegen eine Bewegung relativ zu der Montageschiene 4 in Längsrichtung y gesichert.

Ist die Spannschraube 6 hingegen nicht oder nur geringfügig in die erste Durchgangsbohrung 24 eingeschraubt, also derart, dass kein Kraftschluss zwischen der Montageschiene 4 und dem Anbindungselement 5 vorliegt, ist das Anbindungselement 5 in Längsrichtung y relativ zu der Montageschiene 4 verschiebbar.

Wenn die Spannschraube 6 nicht oder nur geringfügig in die erste Durchgangsbohrung 24 eingeschraubt ist, ist es auch möglich, das Positionierelement aus der Aussparung 19 durch Verschieben in Hochrichtung z nach oben zu entfernen. Ist die Spannschraube 6 geringfügig in die erste Durchgangsbohrung 24 eingeschraubt, bedarf es hierzu einer in Hochrichtung z nach oben wirkenden Kraft, die größer ist als eine Kraft, welche das Federelement 17, welches an seinem in Hochrichtung z oberen Ende an dem Modulklemmelement 15 anliegt, auf den Grundkörper 18 ausübt und welche in Hochrichtung z nach unten wirkt. Wenn das Positionierelement aus der Aussparung 19 entfernt ist, kann das Abstandselement 16 um die Rotationsachse, welche insbesondere der Längsachse der Spannschraube 6 entspricht, rotiert werden. Das Abstandselement 16 wird in eine definierte weitere Position bewegt, in der das Positionierelement derart ausgerichtet ist, dass es in die Aussparung 19 einbringbar ist. Hierzu bedarf es insbesondere einer Rotation um 90 Grad, 180 Grad oder 270 Grad.

Ist die Spannschraube 6 derart in die Durchgangsbohrung 24 eingeschraubt, dass das Anbindungselement 5 an der Montageschiene 4 fixiert ist, ist eine Kraft, welche das Federelement auf den Grundkörper 18 ausübt, derart groß, dass das Positionierelement nicht aus der Aussparung 19 entfernbar ist. Das Abstandselement 16 ist mithin gegen Rotation um die Rotationsachse gesichert.

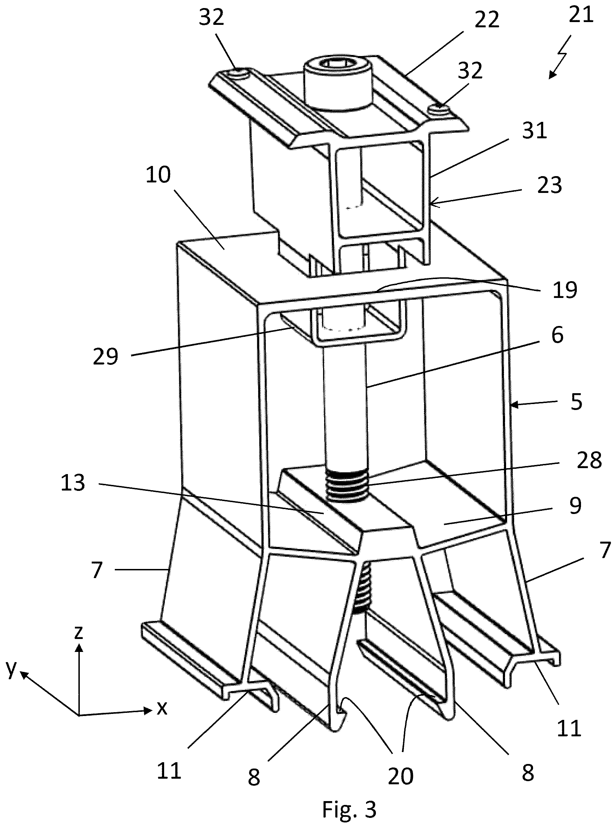

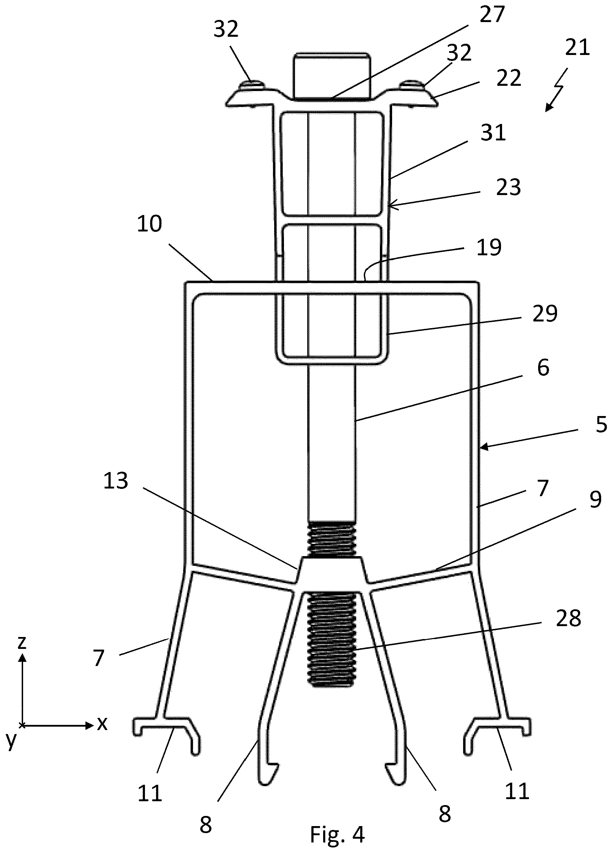

In den Figuren 3 und 4 ist eine zweite Ausführungsform einer Befestigungsvorrichtung 21 nach der Erfindung dargestellt, bei welcher auf eine Darstellung einer Montageschiene verzichtet wurde. Betreffend die Ausgestaltung der Montageschiene gelten die obigen Ausführungen betreffend die in den Figuren 1 und 2 dargestellte erste Befestigungsvorrichtung 1 nach der Erfindung entsprechend.

Die zweite Befestigungsvorrichtung 21 entspricht im Wesentlichen der Ausgestaltung der ersten Befestigungsvorrichtung 1, weshalb im Folgenden lediglich die Unterscheidungsmerkmale erläutert werden. Für alle übrigen Merkmale gelten ebenfalls die obigen Ausführungen betreffend die in den Figuren 1 und 2 dargestellte erste Befestigungsvorrichtung 1 nach der Erfindung entsprechend.

Die zweite Befestigungsvorrichtung 21 unterscheidet sich von der ersten Befestigungsvorrichtung 1 dadurch, dass diese anstelle des Modulklemmelements 15 ein Modulklemmelement 22 und anstelle des Abstandselements 16 ein Abstandselement 23 umfasst.

Das Modulklemmelement 22 und das Abstandselement 23 bilden ein gemeinsames Bauteil. Sie sind also einteilig ausgebildet. Das Abstandselement 23 umfasst einen Grundkörper 31 und ein Positionierelement 29. Der Grundkörper 31 grenzt in Hochrichtung z unten an das Modulklemmelement 22 an. Das Positionierelement 29 grenzt wiederum in Hochrichtung z unten an den Grundkörper 18 an. Das Positionierelement 29 weist eine mit der Aussparung 19 des Anbindungselements 5 korrespondierende Geometrie auf, so dass das Positionierelement 29 in die Aussparung 19 einbringbar, bzw. durch diese hindurchführbar ist. Das Positionierelement 29 ist derart weit in die Aussparung 19 einbringbar, bis der Grundkörper 31 auf der zweiten Querstrebe 10 aufliegt.

Die Aussparung 19 weist in einer Draufsicht ein rechteckiges Profil auf.

### Bezugszeichenliste:

- 1: Befestigungsvorrichtung
- 2: Modulrahmen
- 3: Dachkonstruktion
- 4: Montageschiene
- 5: Anbindungselement
- 6: Spannschraube
- 7: Außenschenkel
- 8: Innenschenkel
- 9: erste Querstrebe
- 10: zweite Querstrebe
- 11: Auflagefläche
- 12: Stützfläche
- 13: mittlerer Bereich
- 14: Hakengegenelement
- 15: Modulklemmelement
- 16: Abstandselement
- 17: Federelement
- 18: Grundkörper
- 19: Aussparung
- 20: Hakenelement
- 21: Befestigungsvorrichtung
- 22: Modulklemmelement
- 23: Abstandselement
- 24: erste Durchgangsbohrung
- 25: Grundplatte
- 26: Schienenelement
- 27: zweite Durchgangsbohrung
- 28: Außengewinde
- 29: Positionierelement
- 30: Sackloch
- 31: Grundkörper
- 32: Erdungspin
- x: Querrichtung
- y: Längsrichtung
- z: Hochrichtung

## Patentansprüche

1. Befestigungsvorrichtung zur Befestigung eines Modulrahmens eines Auflageelements, insbesondere eines Photovoltaik- und/oder Solarthermie-Paneels, an einer Dachkonstruktion, umfassend eine Montageschiene (4), ein Anbindungselement (5), an welchem der Modulrahmen fixierbar ist, und eine Spannschraube (6),
**dadurch gekennzeichnet,**
**dass** das Anbindungselement (5) zwei Außenschenkel (7), zwei zwischen den Außenschenkeln (7) angeordnete Innenschenkel (8), eine erste Querstrebe (9) und eine zweite Querstrebe (10) umfasst, wobei die Innenschenkel (8) an ihrem ersten Ende über die erste Querstrebe (9) mit den Außenschenkeln (7) verbunden sind und die Außenschenkel (7) an ihrem ersten Ende über die zweite Querstrebe (10) miteinander verbunden sind, wobei die Außenschenkel (7) an ihrem zweiten Ende jeweils eine Auflagefläche (11) umfassen, die auf einer Stützfläche (12) der Montageschiene (4) aufliegt, wobei die erste Querstrebe (9) in einem mittleren Bereich (13) eine erste Durchgangsbohrung (24) umfasst, in welche die Spannschraube (6) derart einschraubbar ist, dass die erste Querstrebe (9) in dem mittleren Bereich (13) in Richtung der zweiten Querstrebe (10) verschoben ist, wodurch zweite Enden der Innenschenkel (8) derart zueinander und in Richtung der zweiten Querstrebe (10) bewegt sind, dass an den zweiten Enden angeordnete Hakenelemente (20) jeweils mit einem Hakengegenelement (14) der Montageschiene (4) in Eingriff stehen.

2. Befestigungsvorrichtung nach Anspruch 1,
**gekennzeichnet durch**
ein Modulklemmelement (15, 22), mittels welches zusammen mit dem Anbindungselement (5), insbesondere der zweiten Querstrebe (10), der Modulrahmen (2) zur Fixierung an dem Anbindungselement (5) einklemmbar ist.

3. Befestigungsvorrichtung nach Anspruch 2,
**dadurch gekennzeichnet,**
**dass** das Modulklemmelement (15, 22) eine zweite Durchgangsbohrung (27) umfasst, durch welches sich die Spannschraube (6) erstreckt, wobei der Schraubenkopf auf dem Modulklemmelement (15, 22) aufliegt.

4. Befestigungsvorrichtung nach einem der Ansprüche 1 bis 3,
**dadurch gekennzeichnet,**
**dass** sich die Innenschenkel (8) ausgehend von ihren ersten Enden in Richtung ihrer zweiten Enden voneinander, insbesondere kontinuierlich, entfernen und/oder sich die Außenschenkel (7) ausgehend von einem Bereich, an welchem die erste Querstrebe (9) angrenzt, in Richtung ihrer zweiten Enden voneinander, insbesondere kontinuierlich, entfernen.

5. Befestigungsvorrichtung nach einem der Ansprüche 1 bis 4,
**dadurch gekennzeichnet,**
**dass** das Anbindungselement (5) monolithisch ist.

6. Befestigungsvorrichtung nach einem der Ansprüche 1 bis 5,
**dadurch gekennzeichnet,**
**dass** die erste Querstrebe (9), die Innenschenkel (8) und/oder die Außenschenkel (7) elastisch sind bzw. ist.

7. Befestigungsvorrichtung nach einem der Ansprüche 1 bis 6,
**gekennzeichnet durch**
ein Abstandselement (16, 23), welches zwischen dem Modulklemmelement (15, 22) und dem Anbindungselement (5) angeordnet ist.

8. Befestigungsvorrichtung nach Anspruch 7,
**dadurch gekennzeichnet,**
**dass** das Abstandselement (16, 23) ein Federelement (17) umfasst, welches an seinem ersten Ende insbesondere an dem Modulklemmelement (15, 22) anliegt.

9. Befestigungsvorrichtung nach Anspruch 7 oder 8,
**dadurch gekennzeichnet,**
**dass** das Abstandselement (16, 23) einen Grundkörper (18, 28) mit einem Positionierelement (29) umfasst und die zweite Querstrebe (10) eine Aussparung (19) umfasst, deren Geometrie derart mit der Geometrie des Abstandselements (16, 23) korrespondiert, dass das Abstandselement (16) nur in definierten Positionen auf der zweiten Querstrebe (10) anordbar ist.

10. Befestigungsvorrichtung nach Anspruch 8 in Verbindung mit Anspruch 9,
**dadurch gekennzeichnet,**
**dass** das Federelement (17) an seiner Unterseite an die Oberseite des Grundkörpers (18, 28) angrenzt.

11. Befestigungsvorrichtung nach einem der Ansprüche 7 bis 10,
**dadurch gekennzeichnet,**
**dass** das Abstandselement (16, 23) und die Modulklemme (15, 22) einteilig ausgestaltet sind.

12. Befestigungsvorrichtung nach einem der Ansprüche 1 bis 11,
**dadurch gekennzeichnet,**
**dass** die Auflageflächen (11) der Außenschenkel (7) L-förmig ausgebildet sind.

13. Befestigungsvorrichtung nach einem der Ansprüche 1 bis 12,
**dadurch gekennzeichnet,**
**dass** die erste Querstrebe (9) in dem mittleren Bereich (13) derart in Richtung der zweiten Querstrebe (10) verschoben ist, dass die zweiten Enden der Außenschenkel (7) nach außen gespreizt sind.

14. Befestigungsvorrichtung nach einem der Ansprüche 1 bis 13,
**dadurch gekennzeichnet,**
**dass** die Hakenelemente (20) derart mit den Hakengegenelementen (14) in Eingriff stehen, dass ein Bewegen des Anbindungselements (5) relativ zu der Montageschiene (4) in Hochrichtung (z) in eine erste Richtung unterbunden ist, und die Auflageflächen (11) derart auf den Stützflächen (12) aufliegen, dass ein Bewegen des Anbindungselements (5) relativ zu der Montageschiene (4) in Hochrichtung (z) in eine der ersten Richtung entgegengesetzte zweite Richtung unterbunden ist.

15. Befestigungsvorrichtung nach einem der Ansprüche 1 bis 14,
**dadurch gekennzeichnet,**
**dass** das Anbindungselement (5) an der Montageschiene (4) in Hochrichtung (z) durch Formschluss gesichert ist, dass das Anbindungselement (5) an der Montageschiene (4) in Querrichtung (x) durch Formschluss gesichert ist und/oder dass das Anbindungselement (5) an der Montageschiene (4) in Längsrichtung (y) durch Kraftschluss gesichert ist.
